# EUROPÄISCHE PATENTSCHRIFT

(11) **EP 1 998 086 B1**
(45) Veröffentlichungstag und Bekanntmachung des Hinweises auf die Patenterteilung: **30.07.2014**
(21) Anmeldenummer: 07010816.2
(22) Anmeldetag: 31.05.2007
(51) Int. Cl.: F16J 15/08, F02F 11/00

(54) **Metallische Flachdichtung**
Metal flat gasket
Joint plat métallique

(43) Veröffentlichungstag der Anmeldung: 03.12.2008
(73) Patentinhaber: REINZ-Dichtungs-GmbH, 89233 Neu-Ulm (DE)
(72) Erfinder: Göttler, Andreas, 89073 Ulm (DE); Unseld, Günther, 89189 Neenstetten (DE); Schimmele, Oliver, 89284 Pfaffenhofen (DE)
(74) Vertreter: Tomerius, Isabel

(56) Entgegenhaltungen:
- EP-A- 0 499 551
- EP-A- 1 674 770
- EP-A- 1 679 457
- US-A- 5 890 719

## Beschreibung

Die Erfindung betrifft eine metallische Flachdichtung, die sich insbesondere als Zylinderkopfdichtung für Nutzfahrzeuge eignet. Bei Zylinderkopfdichtungen kommt der Abdichtung der Brennraumöffnungen, bei Auspuffkrümmerdichtungen der der Brenngasöffnungen, eine besondere Bedeutung zu. Um eine sichere Abdichtung in diesem Bereich zu gewährleisten, ist es daher insbesondere bei Anwendungen, wie sie üblicherweise bei LKW-Dieselmotoren mit oder ohne Laufbuchsen vorgefunden werden, notwendig, die Schraubenkraft, mit der Zylinderkopf und Motorblock miteinander verbunden werden, am Brennraum zu konzentrieren. Um dies zu erreichen, ist es bei Zylinderkopfdichtungen für Verbrennungsmotoren mit geringem oder fehlendem Buchsenüberstand üblich, am Brennraumrand eine so genannte Überhöhung zu erzeugen. Dies bedeutet, dass im Bereich um die Brennraumöffnungen die Gesamtdicke der Dichtungslagen der Zylinderkopfdichtung einschließlich eines gegebenenfalls vorhandenen geringen Buchsenüber- oder unterstands größer ist als die Gesamtdicke der Dichtungslagen in weiter von den Brennraumöffnungen entfernt gelegenen Bereichen der Dichtung, dem so genannten Hinterland.

Eine solche Überhöhung am Brennraumrand wird häufig durch Verwendung eines so genannten Stoppers erreicht. Bei diesen Stoppern handelt es sich üblicherweise um massive ringförmige Einlagen, die direkt am Brennraumrand entlang verlaufen. Die Höhe der Stopper ist im Allgemeinen so bemessen, dass sie, gegebenenfalls in Kombination mit der Dicke der im Bereich um die Brennraumöffnung vorhandenen Dichtungslagen, den Dichtspalt zwischen Motorblock und Zylinderkopf im Bereich um die Brennraumöffnung vollständig ausfüllen. Alternativ zum Einlegen eines separaten Rings kann der Stopper auch durch Umbiegen eines Randbereichs der Dichtungslage an der Brennraumöffnung hergestellt werden. Derartige Stopper weisen keinerlei elastische Eigenschaften auf. Um eine sichere Abdichtung der Brennraumöffnungen zu erreichen, werden Stopper deshalb üblicherweise in Kombination mit einem elastischen Dichtelement, im Allgemeinen einer Sicke, verwendet, die üblicherweise von der Brennraumöffnung aus gesehen radial außerhalb des Stoppers verläuft. Der Stopper dient in der Regel gleichzeitig auch als Abstützelement für die Sicke und verhindert deren vollständiges Abplatten beim Betrieb der Dichtung. Auch das Anbringen eines Stoppers radial hinter der Sicke alternativ oder zusätzlich zum Stopper am Brennraumrand ist aus dem Stand der Technik bekannt. Weiterhin gibt es Lösungen, bei denen eine elastische Sicke mit einem separaten starren Element so kombiniert wird, dass beide einen vergleichbaren radialen Abstand zum Brennraumrand aufweisen.

Der Aufbau der Stopper-Sicken-Dichtungen ist vergleichsweise kompliziert. Zudem ist es, um eine sichere Abdichtung der Brennraumöffnungen zu erhalten, häufig erforderlich, den Bereich der Zylinderkopfdichtung um die Brennraumöffnungen herum topographisch auszugestalten. Ohne eine solche topographische Ausbildung wäre der von den Befestigungsmitteln ausgeübte Zusammenspanndruck in Umfangsrichtung um die Brennraumöffnungen herum häufig unregelmäßig. Zum Befestigen des Zylinderkopfes am Motorblock sind üblicherweise um die Brennraumöffnung herum mehrere Schrauben verteilt. Im verbauten Zustand stellt sich zwischen den Schrauben üblicherweise ein größerer Abstand zwischen Zylinderkopf und Zylinderblock ein als an den Schrauben selbst. Als Folge hiervon vergrößert sich der von der zwischen Motorblock und Zylinderkopf angeordneten Zylinderkopfdichtung auszufüllende Dichtspalt. Dieser Dichtspaltvarianz wird durch eine entsprechende Topographie der Zylinderkopfdichtung um die Brennraumöffnungen herum Rechnung getragen. Es ist beispielsweise bekannt, die Höhe des Stoppers in Umfangsrichtung um die Brennraumöffnung der Größe des Dichtspalts folgend auszugestalten. Die Ausbildung einer derartigen Topographie in massiven Stoppern gestaltet sich jedoch oft aufwendig und schwierig.

Eine alternative Lösung zur Abdichtung von Brennraumöffnungen in Zylinderkopfdichtungen für Nutzfahrzeugmotoren besteht darin, anstelle einer Stopper-Sicken-Kombination eine rein plastische Sicke am Brennraumrand einzusetzen. Diese rein plastische Sicke, bei der es sich auch um eine Mehrfachsicke handeln kann, die in mehreren konzentrischen Ringen um die Brennraumöffnung verläuft, besitzt im Unterschied zu den Sicken der Stopper-Sicken-Dichtungen praktisch keine elastischen Eigenschaften. Dieser Mangel an Elastizität führt jedoch häufig zu nicht zufriedenstellenden Dichteigenschaften um die Brennraumöffnungen. Um die erforderliche Steifigkeit zu erhalten, sind die plastischen Sicken zudem häufig mit einem so genannten Hardcoating versehen oder der Sickenhohlraum ist mit einem versteifenden Material verfüllt. Dies erschwert und verteuert die Herstellung einer derartigen Dichtung. Die US 5,890,719 A beschreibt eine Zylinderkopfdichtung mit den Merkmalen des Oberbegriffs des Anspruchs 1.

Es bestand also ein Bedarf an einer metallischen Flachdichtung und insbesondere einer Zylinderkopfdichtung für Verbrennungsmotoren, welche bei einfachem Aufbau dennoch zu einer sicheren Abdichtung der Durchgangsöffnungen und insbesondere der Brennraumöffnungen im Fall von Zylinderkopfdichtungen führt. Aufgabe der Erfindung ist es entsprechend, eine derartige metallische Flachdichtung anzugeben.

Die Lösung dieser Aufgabe gelingt mit der metallischen Flachdichtung gemäß Anspruch 1. Bevorzugte Ausführungsvarianten dieser Flachdichtung sind in den Unteransprüchen beschrieben.

Demnach betrifft die Erfindung eine metallische Flachdichtung mit mindestens einer Dichtungslage, die aus Metall mit einer Zugfestigkeit von mindestens 600 N/mm² besteht und mindestens 4 Durchgangsöffnungen für Befestigungsmittel sowie wenigstens eine weitere Durchgangsöffnung für Schmier- oder Kühlmittel aufweist, welche von einem Abdichtelement aus Elastomer umschlossen wird. Zudem besitzt sie wenigstens eine Brennraumdurchgangsöffnung, die einen Durchmesser von kleiner als 200 mm besitzt und von einem elastisch verformbaren Abdichtelement umschlossen wird. Das Abdichtelement ist in Form einer wellenförmigen Profilierung in der Dichtungslage in der Weise ausgebildet, dass auf jeder der Oberflächen der Dichtungslage wenigstens jeweils zwei Wellenberge und zwei Wellentäler vorhanden sind. In Einzelfällen kommt es dabei vor, dass nur 1 1/2 Wellenperioden die Brennraumdurchgangsöffnung vollständig umlaufend umschließen. Dabei ist die Dicke der Dichtungslage im Bereich des Abdichtelements im unbelasteten Zustand größer als die originäre Dicke der Dichtungslage. Außer dieser wellenförmigen Profilierung sind für die Brennraumdurchgangsöffnung keine weiteren Abdicht- oder Abstützelemente in der Flachdichtung vorhanden. Das Abdichtelement, also die wellenförmige Profilierung, ist dabei so ausgelegt, dass zwischen der originären Dicke der Dichtungslage und der Dicke im Bereich des Abdichtelements auch dann noch ein Dickenunterschied besteht, wenn das Abdichtelement einer Belastung mit einer Linienpressung von 500 bis 2800 N/mm in einer zur Ebene der Dichtungslage im Wesentlichen senkrechten Richtung ausgesetzt wird. Konkret ist im eingebauten Zustand die Dicke der Dichtungslage im Bereich des Abdichtelements um 0,05 bis 0,3 mm, bevorzugt 0,05 bis 0,2 mm, größer als die originäre Dicke der Dichtungslage. Im Wesentlichen senkrecht bedeutet, dass die Krafteinwirkung nicht mehr als 2 ° und insbesondere nicht mehr als 1 ° aus der Senkrechten abweicht.

Eine solche Ausgestaltung des Abdichtelements um die Durchgangsöffnung bedeutet, dass das Abdichtelement gleichzeitig elastische und starre Eigenschaften aufweist. Die starren Eigenschaften sind dabei so eingestellt, dass auch bei einer Krafteinwirkung der vorhandenen Schraubenkraft im Bereich des Abdichtelements eine während des Betriebs der Dichtung dauerhaft bestehen bleibende Überhöhung am Brennraumrand gebildet wird. Diese dauerhafte Überhöhung im Bereich der Durchgangsöffnung erlaubt es, die Schraubenkräfte in diesem Bereich zu konzentrieren und für den nötigen hohen Zusammenspanndruck in diesem Bereich zu sorgen. Die wellenförmige Profilierung als Abdichtelement kann auf diese Weise die Funktion eines massiven Stoppers übernehmen. Gleichzeitig weist die wellenförmige Profilierung aber auch elastische Eigenschaften auf. Diese elastischen Eigenschaften ermöglichen es der wellenförmigen Profilierung als dem Abdichtelement der Durchgangsöffnung, Dichtspaltänderungen, z.B. von 5-15 µm, während des Betriebs der Dichtung elastisch zu folgen und so auch in diesem Fall eine ausgezeichnete Dichtigkeit um die Durchgangs öffnung herum zu gewährleisten. Aufgrund der hohen Elastizität des Abdichtelements ist es sogar möglich, die Schraubenkräfte auf ein Mindestmaß zu reduzieren, ohne dass darunter die Dichtigkeit leidet.

Die Erfindung vereint in dem spezifisch ausgebildeten Abdichtelement die Funktionen eines elastischen Elements (beispielsweise einer Sicke) und eines (starren) Stoppers einer herkömmlichen Dichtung in einem einzigen Element. Dadurch können Aufbau und Herstellung gegenüber den herkömmlichen Dichtungen stark vereinfacht werden. Zudem lässt sich über die Wahl der Anzahl Wellenberge und Wellentäler die Steifigkeit an die benötigten Bedürfnisse anpassen. Erfindungsgemäß ist die wellenförmige Profilierung so ausgelegt, dass auf jeder der Oberflächen der Dichtungslage wenigstens zwei Wellenberge und zwei Wellentäler vorhanden sind. Es sind also für jede Oberfläche wenigstens zwei um die Durchgangsöffnung verlaufende Pressungslinien vorhanden. Bevorzugt werden mehr als zwei Wellenberge und zwei Wellentäler pro Oberfläche der Dichtungslage in diese eingeformt, so dass entsprechend mehr ringförmige Pressungslinien um die Öffnung herum entstehen. Die Vielzahl dieser Pressungslinien sorgt für eine ausreichende Dichtigkeit im Bereich um die Durchgangsöffnung.

Die Ausbildung der wellenförmigen Profilierung kann in vielfältiger Weise entsprechend den jeweiligen Anforderungen variiert werden. Üblicherweise wird der Verlauf der Wellenberge und Wellentäler um die Durchgangsöffnung herum dem Verlauf der Außenkontur der Durchgangsöffnung folgen. Im Fall einer kreisrunden Öffnung beispielsweise können die Wellenberge und Wellentäler also in konzentrischen Kreisringen um die Durchgangsöffnung herum verlaufen. Es sind jedoch auch andere Grundrissformen wie beispielsweise ovale, polyedrische oder sonstige regelmäßige oder unregelmäßige Verlaufsformen denkbar. Aus Platzgründen verlaufen Wellenberge und Wellentäler bevorzugt entlang konzentrischer Linien, aber auch dies ist nicht unbedingt erforderlich.

Auch der Querschnitt der Wellenberge und Wellentäler der wellenförmigen Profilierung in einem Schnitt in Radialrichtung kann grundsätzlich beliebig gestaltet werden. Bevorzugte Formen weisen ein sinus-, trapez- oder zickzackförmiges Querschnittsprofil auf. Es sind jedoch auch Abwandlungen dieser Formen, beispielsweise mit unterschiedlich steil ansteigenden Flanken, abgeplatteten Scheiteln usw. denkbar. Die Querschnittsform kann für alle Wellenberge und Wellentäler gleich sein oder sich für einzelne Wellenberge und/der Wellentäler unterscheiden. Außerdem ist es möglich, die Querschnittsform im Verlauf eines einzelnen Wellenberges oder Wellentales zu verändern.

Die wellenförmige Profilierung als Abdichtelement der Durchgangsöffnung eignet sich entsprechend in hervorragender Weise, um eine Topographie im Bereich um die Durchgangsöffnung zu erzeugen. Auf diese Weise können die Abdichteigenschaften gezielt den jeweils vorgefundenen Bedingungen angepasst werden. Die Variation der Eigenschaften wie beispielsweise Höhe und/oder Steifigkeit der wellenförmigen Profilierung kann sowohl in Radial- als auch in Umfangsrichtung oder in beiden Richtungen variiert werden. Bevorzugt geschieht diese Anpassung durch Variation wenigstens einer der folgenden Eigenschaften: der Höhe der Wellenberge, der Querschnittsform der Wellenberge und/oder der Wellentäler, dem Abstand zwischen benachbarten Wellenbergen und der Materialstärke im Bereich der Wellenberge und/oder Wellentäler. Bei der Variation der Höhe der Wellenberge ist es auch möglich, dass ein Wellenberg in Umfangsrichtung in seiner Höhe bereichsweise auf Null reduziert wird, also sozusagen abschnittsweise in der Dichtungslage verschwindet. Die Höhenänderung im Rahmen der Topographie beträgt bevorzugt bis zu 0,03 mm und erfolgt in jedem Fall so, dass die Überhöhung am Rand der Durchgangsöffnung im beanspruchten Bereich von 0,05 bis 0,3 mm liegt. Eine größere Höhe der Wellenberge, steiler ansteigende Flanken der Wellenberge und der Wellentäler, ein geringerer Abstand zwischen benachbarten Wellenbergen und eine größere Materialstärke führen dabei zu einer erhöhten Steifigkeit der wellenförmigen Profilierung.

Um die erforderliche dauerhafte Überhöhung am Brennraumrand sicher zu stellen, weist das Abdichtelement in Form der wellenförmigen Profilierung nicht nur elastische, sondern auch plastische Eigenschaften auf. Gegenüber der Elastizität herkömmlicher Sicken ist die Elastizität der wellenförmigen Profilierung daher geringer. Dies zeigt sich auch darin, dass die Abmessungen der wellenförmigen Profilierung kleiner sind als die Abmessungen einer herkömmlichen Sicke oder Mehrfachsicke. So liegt der Abstand der Scheitelpunkte benachbarter Wellenberge der wellenförmigen Profilierung zweckmäßig in einem Bereich bis zu 2,0, bevorzugt 1,7, besonders bevorzugt 1,5, insbesondere 1,0 mm. Weisen die Wellenberge keinen Scheitelpunkt, sondern einen abgeplatteten Scheitelbereich auf, wird der Abstand zwischen den Mittelpunkten dieser Scheitelbereiche gemessen und zwar immer in einer zur Ebene der Dichtungslage parallelen Ebene. Wenn ein Wellenberg in Umfangsrichtung in seiner Höhe auf Null reduziert ist, wird der Abstand zwischen den benachbarten Wellenbergen selbstverständlich in den Bereichen gemessen, in denen der Wellenberg eine größere Höhe als Null besitzt. Variiert der Abstand benachbarter Wellenberge in Umfangsrichtung zueinander, liegen alle diese Abstände zweckmäßig im angegebenen Bereich.

Die wellenförmige Profilierung als Abdichtelement ist in der Dichtungslage selbst ausgebildet. Dies bedeutet, dass die wellenförmige Profilierung nicht in einem separaten Teil erzeugt ist, sondern integral und einstückig in der Dichtungslage. Es müssen also keine Einlageringe verwendet werden, wie dies üblicherweise bei herkömmlichen Stoppern der Fall ist. Dies vereinfacht und verbilligt die Herstellung der Dichtung erheblich. Die wellenförmige Profilierung wird so erzeugt, dass in Richtung beider Oberflächen der Dichtungslage Wellenberge und Wellentäler ausgebildet sind, diese müssen dabei nicht symmetrisch sein. Die Dicke der Dichtungslage im Bereich der wellenförmigen Profilierung ist daher größer als die originäre Dicke der Dichtungslage, also die Dicke der Dichtungslage vor dem Einformen der Wellenberge und Wellentäler. Die Dicke der Dichtungslage im Bereich der wellenförmigen Profilierung wird dabei als der Abstand zwischen zwei Tangentialebenen gemessen, die jeweils parallel zur Ebene der Dichtungslage an den jeweils höchsten Wellenberg, der über die eine und die andere Seite der Dichtungslage vorsteht, angelegt werden.

Der Überstand des profilierten Bereichs beträgt erfindungsgemäß im eingebauten Zustand mindestens 0,05 mm. Im kalten Zustand betragen die Schraubenkräfte, die auf die Dichtung einwirken, pro Schraube 50-220 kN, bevorzugt 60-200 kN und besonders bevorzugt 100-200 kN, oder ausgedrückt als Linienpressung 500-2800 N/mm, bevorzugt 800-2500 N/mm, besonders bevorzugt 800-1500 N/mm. Die Linienpressung bezieht sich dabei auf die mittlere Umlauflänge der wellenförmigen Profilierung. Die mittlere Umlauflänge ist die Erstreckung in Umfangsrichtung um die Brennraumöffnung in der Mitte (bei der halben Breite) der Profilierung. Im Labor wird die Höhe des profilierten Bereichs so ermittelt, dass dieser Bereich mit einer Kraft im Wesentlichen senkrecht belastet wird. Im Wesentlichen senkrecht bedeutet, dass die Schraubenkrafteinwirkung nicht mehr als 2° und insbesondere nicht mehr als 1° aus der Senkrechten abweicht. Der Überstand beträgt unter Vorlastbedingungen, d.h. unter dem für reproduzierbare Messungen mindestens notwendigen Druck von 2,4 N/mm², 0,05 bis 0,35 mm, bevorzugt 0,07 bis 0,32 mm. Bei Simulation der o.g. Krafteinwirkung im Einbauzustand beträgt die dauerhafte Überhöhung der wellenförmigen Profilierung von 0,05 bis 0,3 mm, bevorzugt 0,05 bis 0,2 mm.

Bevorzugt wird die wellenförmige Profilierung durch Prägen erzeugt. Grundsätzlich entspricht ein Wellenberg auf der einen Oberfläche der Dichtungslage einem Wellental auf der anderen Oberfläche und umgekehrt. Eine Topographie kann dabei mit dem Einprägen der Profilierung in die Dichtungslage erzeugt werden. Es sind jedoch auch andere Herstellungsverfahren wie beispielsweise Tiefziehen, Hydroforming oder Rändeln denkbar.

Um sowohl die erforderlichen elastischen als auch starren Eigenschaften der wellenförmigen Profilierung zu erzielen, wird für die Dichtungslage zweckmäßig ein relativ dickes Metallblech verwendet. Bevorzugt sind Dicken im Bereich von 0,2 bis 1,5 mm, wobei für mehrlagige Dichtungen Blechdicken von 0,3 bis 1,0 mm und für einlagige Dichtungen 0,8 bis 1,2 mm bevorzugt sind. Zudem weist das Metall eine relativ hohe Zugfestigkeit auf, die bei mindestens 600 N/mm² und insbesondere bei mindestens 1000 N/mm² liegt. Ein bevorzugtes Material für die Dichtungslage ist Stahl. Die Erfindung erlaubt die Verwendung relativ preiswerter Stähle wie beispielsweise herkömmlicher Kohlenstoffstähle oder kaltgewalzter Kohlenstoffstähle (z.B. C590, C75). Sind stärker ausgeprägte elastische Eigenschaften gefordert, kann auch Federstahl verwendet werden. Geeignete Stähle sind beispielsweise auch Edelstähle, insbesondere diejenigen der Typennummern 1,4310, 1,4372, 1,4301 oder 1,4303. Durch geeignete Auswahl des Materials selbst, der Materialstärke sowie der Art der Ausbildung der wellenförmigen Profilierung kann die Steifigkeit des Abdichtelements auf den speziellen Anwendungsfall gezielt abgestimmt werden. Auf die verschiedenen Möglichkeiten bei der Ausbildung der wellenförmigen Profilierung wurde bereits vorstehend hingewiesen. Bei Verwendung von federhartem Stahl kann beispielsweise durch Verjüngung der Flanken, also Verringerung der Materialdicke im Bereich der Flanken der Wellenberge und Wellentäler, eine stärkere Versteifung eingestellt werden. Im Unterschied zu den plastisch verformbaren Sicken des Standes der Technik ist es bei der Erfindung nicht erforderlich, die Wellentäler mit einem Material wie beispielsweise Elastomer auszufüllen, um die Steifigkeit der Sicken zu erhöhen. Die Verwendung solcher Füllmaterialien oder so genannter Hardcoatings für den Bereich der wellenförmigen Profilierung ist im Rahmen der Erfindung nicht bevorzugt. Die Steifigkeit der wellenförmigen Profilierung wird ausschließlich durch Auswahl des Materials und Formgebung der Profilierung selbst eingestellt.

Wie bereits erwähnt, wird die wellenförmige Profilierung in die Dichtungslage eingearbeitet und nicht als separat gefertigter Ring in die Dichtungslage eingesetzt bzw. aufgeschweißt. Dies bedeutet jedoch nicht zwangsläufig, dass die Dichtungslage insgesamt einstückig sein muss. Insbesondere bei sehr großflächigen Dichtungen kann es bevorzugt sein, die Dichtungslage, in welcher die wellenförmige Profilierung erzeugt ist, aus mehreren Segmenten zusammenzusetzen. Dabei umfasst ein Segment, das die Durchgangsöffnung mit der wellenförmigen Profilierung enthält, jedoch wenigstens einen Bereich, der sich von der Durchgangsöffnung nach außen erstreckt und mindestens einen Teil der die Durchgangsöffnung umgebenden Befestigungsmittelöffnungen enthält. Das Segment muss dabei nicht bis zum Dichtungsaußenrand reichen. Ist die Dichtungslage in mehrere Segmente aufgeteilt, sind diese bevorzugt möglichst gleichförmig gestaltet. Auf diese Weise ist es möglich, in Modulbauweise zum Beispiel verschieden große Dichtungen durch Aneinanderreihung der Segmente aufzubauen. Ein solches Vorgehen ist insbesondere bei Zylinderkopfdichtungen von Vorteil. Hier kann die Dichtungslage beispielsweise quer zu den Längsseiten geteilt sein, so dass sich Segmente ergeben, welche ein oder zwei Zylinderöffnungen enthalten. Durch Aneinanderreihen von Segmenten mit zwei Zylinderöffnungen beispielsweise können auf diese Weise Dichtungslagen für 4-Zylindermotoren, 6-Zylindermotoren usw. aufgebaut werden. Alternativ oder zusätzlich ist es möglich, im so genannten Hinterland der Dichtungslage, also in einem Bereich außerhalb der von der wellenförmigen Profilierung umgebenen Durchgangsöffnung, so genannte Inserts in Öffnungen der Dichtungslage einzusetzen. Der Bereich der wellenförmigen Profilierung selbst jedoch ist, wie bereits erwähnt, nicht als Insert ausgebildet.

Die erfindungsgemäße metallische Flachdichtung wird üblicherweise mehr als nur eine einzige Brennraumdurchgangsöffnung aufweisen. Beispielsweise können mehrere von einer wellenförmigen Profilierung umgebene Brennraumdurchgangsöffnungen vorhanden sein. Zudem kann die Dichtungslage Durchgangsöffnungen anderen Typs aufweisen, die nachfolgend als weitere Durchgangsöffnungen bezeichnet werden. Ist die metallische Flachdichtung eine Zylinderkopfdichtung, handelt es sich bei den von der wellenförmigen Profilierung umgebenen Durchgangsöffnungen um die Brennraumöffnungen. Bei den weiteren Durchgangsöffnungen kann es sich um Öffnungen für Kühlwasser und Öl sowie um Schraubenöffnungen handeln. Müssen diese weiteren Durchgangsöffnungen ebenfalls von Dichtelementen umgeben werden, werden hierfür häufig keine wellenförmigen Profilierungen als Abdichtelemente verwendet, sondern andere elastisch verformbare Dichtelemente wie beispielsweise Sicken oder Wülste aus Elastomer.

Zudem kann die erfindungsgemäße metallische Flachdichtung mehr als nur eine Dichtungslage aufweisen. Grundsätzlich ist es dabei denkbar, weitere Dichtungslagen mit einer wellenförmigen Profilierung als Abdichtelement einer Durchgangsöffnung zu verwenden. Dies ist jedoch nicht bevorzugt. Als weitere Dichtungslagen werden vielmehr eine oder mehrere Dichtungslagen verwendet, die sich in ihrer Art von der Dichtungslage mit wellenförmiger Profilierung unterscheiden. Bei den weiteren Dichtungslagen handelt es sich zum Beispiel um metallische Dichtungslagen, die weitgehend frei sind von Stopper- oder sonstigen Abstützelementen. In einer bevorzugten Variante ist die wenigstens eine weitere Dichtungslage vollkommen plan. Bei den weiteren Dichtungslagen kann es sich um Distanz- und/oder Deckbleche handeln. Zusätzlich oder alternativ zu diesen weiteren Dichtungslagen können andere Dichtungslagen vorhanden sein, welche Funktionselemente aufweisen. Bei den Funktionselementen kann es sich beispielsweise um elastische Dichtelemente, insbesondere um in die Dichtungslage eingeformte Sicken, Stopper- oder sonstige Abstützelemente handeln. Diese befinden sich dann jedoch nicht in denjenigen Bereichen, die der wellenförmigen Profilierung gegenüberliegen und umschließen auch keine der von den wellenförmigen Profilierungen umgebene Brennraumöffnung einzeln, d.h. sie wirken nicht als Abdichtelemente für diese. Die Anzahl der weiteren Dichtungslagen ist grundsätzlich beliebig. Bevorzugt ist es jedoch, wenn die erfindungsgemäße Flachdichtung lediglich eine oder maximal zwei weitere Dichtungslagen enthält. Diese Dichtungslagen werden nachfolgend als Deckbleche bezeichnet, da sie bevorzugt auf einer oder beiden Oberflächen der mit der wellenförmigen Profilierung versehenen Dichtungslage angeordnet sind. Die Flächenausdehnung der weiteren Dichtungslagen kann derjenigen der Dichtungslage mit der wellenförmigen Profilierung entsprechen oder sich von dieser unterscheiden. Die in der Dichtungslage mit der wellenförmigen Profilierung vorhandenen Durchgangsöffnungen sind korrespondierend in den weiteren Dichtungslagen ebenfalls vorhanden. Die Durchgangsöffnungen schließen dabei häufig nicht exakt bündig miteinander ab. Dies ist einerseits auf Stanztoleranzen bei der Fertigung zurückzuführen, andererseits kann es für das Zusammenfügen der verschiedenen Lagen auch notwendig sein, einen kleinen, aber merkbaren Größenunterschied vorzusehen.

Bevorzugt ist das wenigstens eine Deckblech so auf der Oberfläche der Dichtungslage angeordnet, dass es den Bereich der wellenförmigen Profilierung überdeckt. Bevorzugt ist das Deckblech in diesem Bereich eben. Dies hat zum Einen den Vorteil, dass das wenigstens eine Deckblech eine plane und glatte Auflagefläche für die wellenförmige Profilierung bereitstellt. Außerdem verhindert das Deckblech, dass sich die Scheitelbereiche der Wellenberge in die abzudichtenden Gegenflächen eingraben können.

Wird die Dichtung mehrlagig ausgeführt, werden die Dichtungslagen mittels Verfahren des Standes der Technik miteinander verbunden, d.h. Schweißen, insbesondere Laserschweißen, Clinchen, Nieten, Kleben, Verschrauben, Verkrallen.

Der Bereich der Deckbleche, die den nicht mit einer wellenförmigen Profilierung versehenen weiteren Durchgangsöffnungen der Dichtungslage gegenüber liegen, kann unterschiedlich gestaltet werden. Eine Möglichkeit besteht beispielsweise darin, das Dichtelement für die wenigstens eine weitere Durchgangsöffnung im Deckblech vorzusehen. Beispielsweise kann in das Deckblech, das zu diesem Zweck bevorzugt aus Federstahl besteht, im Bereich um die weitere Durchgangsöffnung eine Sicke eingeprägt sein. In einer weiteren Variante ist die weitere Durchgangsöffnung von einem in der profilierten Dichtungslage vorhandenen Abdichtelement aus Elastomer umschlossen. In diesem Fall weist das Deckblech im Bereich dieser weiteren Durchgangsöffnung zweckmäßig eine Aussparung auf. Diese ist dabei so bemessen, dass auch das elastomere Dichtelement in der Aussparung des Deckblechs aufgenommen wird. Die Höhe der Elastomerauftragung ist dabei zweckmäßig so gewählt, dass das elastomere Dichtelement in seiner Höhe über die Oberfläche des Deckblechs nach außen vorsteht. Beispielsweise ist die Höhe des elastomeren Dichtelements etwa 25 % größer als der Abstand von der Oberfläche der Dichtungslage, auf die das elastomere Dichtelement aufgetragen ist, bis zur Außenoberfläche des Deckblechs, gemessen im Einbauzustand der metallischen Flachdichtung. Bei dieser Ausgestaltung kann das Deckblech als Verpressungsschutz für das elastomere Dichtelement der weiteren Durchgangsöffnung dienen und verhindern, dass das Elastomerelement bei zu hohem Druck überpresst wird. Der Abstand zwischen Elastomerelement und dem Rand der Aussparung des Deckblechs ist dabei so groß, dass sich beide Teile auch beim Betrieb der Dichtung nicht berühren, aber dennoch der gewünschte Verpressungsschutz erzielt wird. Bevorzugt wird im unverbauten Zustand ein Abstand von etwa 0,5 mm eingehalten.

Auch in den Bereichen, die dem Außenrandbereich der profilierten Dichtungslage gegenüber liegen, kann das wenigstens eine Deckblech zumindest abschnittsweise oder auch vollständig ausgespart sein. Eine solche Reduzierung der Ausdehnung des wenigstens einen Deckbleches gegenüber der profilierten Dichtungslage kann beispielsweise dann sinnvoll sein, wenn die profilierte Dichtungslage eine im Außenrandbereich teilweise oder vollständig umlaufende elastomere Dichtwulst als Randabdichtung aufweist. Bevorzugt sind Außenrandabdichtungen, die wenigstens entlang 80 %, bevorzugt 90 %, besonders bevorzugt 100 % des gesamten Außenrandes der profilierten Dichtungslage umlaufen. Die Außenrandabdichtung besteht bevorzugt ebenfalls aus einem Elastomer. Wie schon bei der Abdichtung weiterer Durchgangsöffnungen im Inneren der Dichtungslage beschrieben, kann das wenigstens eine Deckblech auch in diesem Fall als Verpressungsschutz für die Außenrand-Dichtwulst dienen. Hinsichtlich Höhe der Dichtwulst und Abstand zum Rand des Deckblechs gilt das vorstehend zu den elastomeren Abdichtelementen im Inneren der Dichtungslage Ausgeführte.

Es kann jedoch auch Fälle geben, in denen das Deckblech nicht nahe genug an die Außenrand-Dichtwulst herangeführt werden kann, um noch für einen Verpressungsschutz zu sorgen. Dies kann beispielsweise dann der Fall sein, wenn in Nachbarschaft zu der Außenrand-Dichtwulst von elastomeren Abdichtelementen abgedichtete Durchgangsöffnungen vorhanden sind, in deren Bereich das Deckblech ebenfalls ausgespart werden muss. In solchen Fällen kann für einen Verpressungsschutz der Außenrand-Dichtwulst gesorgt werden, indem in deren Nähe lokale Abstützelemente vorgesehen werden. Bei diesen lokalen Abstützelementen handelt es sich um räumlich eng begrenzte Verdickungen der profilierten Dichtungslage. Eine solche Aufdickung kann durch lokale Auftragung von Material auf die Dichtungslage erreicht werden. Dies kann beispielsweise mittels eines Bördels oder durch Aufschweißen/Aufkleben eines separaten Elements geschehen. Eine bevorzugte Art der Erzeugung eines lokalen Abstützelements ist das Einsetzen einer Hülse in die Dichtungslage. Diese Hülse wird in eine Durchgangsöffnung der Dichtungslage eingesteckt und steht zu beiden Seiten über deren Oberflächen vor. Gegen Herausfallen kann sie beispielsweise durch Ausstellen der Außenränder gesichert werden. Andere Befestigungsmethoden umfassen Schweißen, Verklemmen, Verkleben oder Verbindung über das Elastomer. Besonders bevorzugt ist es, wenn die Abstützhülse in eine bereits vorhandene Durchgangsöffnung der Dichtungslage eingesetzt wird. Deren Durchmesser wird hierfür entsprechend vergrößert. Besonders geeignet als Durchgangsöffnung zum Einsetzen einer Abstützhülse ist eine Schraubenöffnung. Größe, Anzahl, Höhe und Lage der Abstützelemente richtet sich nach Lage, Form und Ausdehnung der Außenrand- Dichtwulst. Bevorzugt entspricht die Höhe des Abdichtelements der originären Gesamtblechdicke.

Die Außenrand-Dichtwulst kann entweder ein- oder beidseitig auf den Oberflächen der Dichtungslage mit der wellenförmigen Profilierung angeordnet sein. Sie kann unmittelbar am Auβenrand der Dichtungslage oder mit einem Abstand zu diesem verlaufen. Eine bevorzugte Variante besteht darin, die Außenrand-Dichtwulst an der Außenrandkante der Dichtungslage nach außen und über beide Oberflächen der Dichtungslage vorspringend anzuordnen. Die Außenrand-Dichtwulst wird - wie die übrigen Dichtelemente aus Elastomer auch - bevorzugt angespitzt. Als Materialien können alle auch bisher zu diesem Zweck in metallischen Flachdichtungen und insbesondere Zylinderkopfdichtungen eingesetzten Elastomere, also sowohl natürliche als auch synthetische Elastomere, verwendet werden. Geeignet sind beispielsweise TPE (thermoplastische Elastomere), Fluorpolymere, zum Beispiel FPM (Vinylidenfluorid-Hexafluorpropylen-Copolymer), PFA, MFA, NBR-Kautschuk (Acryl-Butadien-Kautschuk), HNBR (hydrierter Acryl-Butadien-Kautschuk), EPDM (Ethylen-Propylen-Kautschuk), Silikonkautschuk, ACM (Polyacrylat), EAM (Ethylen-Acrylat) oder auch PU (Polyurethan). Die Elastomere weisen bevorzugt eine Härte von mindestens 35 Shore A auf. Die elastomeren Abdichtelemente können in üblicher Weise auch dazu verwendet werden, nicht nur eine, sondern mehrere Durchgangsöffnungen auf einmal abzudichten. Entsprechend großräumige Aussparungen sind dann in dem wenigstens einen Deckblech vorhanden.

Weiterhin kann das Elastomer auch durch den Bereich geführt, in dem zwei jeweils von einer wellenförmigen Profilierung umgebene Durchgangsöffnungen einander benachbart sind. Die Auftragung des Elastomers im Stegbereich zwischen benachbarten Öffnungen ist bevorzugt als Abschnitt in ein elastomeres Abdichtelement integriert, das eine oder mehrere Durchgangsöffnungen abdichtet. Im Stegbereich erfolgt, wir bereits erwähnt, bevorzugt auch die Teilung der Dichtungslage in mehrere Segmente. Der Trennbereich zwischen benachbarten Segmenten verläuft dabei dann außerhalb der von dem Elastomer eingenommenen Fläche. Im Trennbereich zwischen zwei benachbarten Segmenten ist das Deckblech dabei bevorzugt so ausgeführt, dass es den Grenzbereich, in dem die Segmente aneinanderstoßen, noch abdeckt. Eine solche Abdeckung der Grenzbereiche nebeneinander liegender Segmente durch die Deckbleche ist auch dann bevorzugt, wenn in dem Stegbereich zwischen benachbarten von wellenförmigen Profilierungen umgebenden Durchgangsöffnungen keine elastomeren Abdichtelemente verlaufen.

Die Erfindung eignet sich grundsätzlich für die verschiedensten Arten metallischer Flachdichtungen, zum Beispiel Abgaskrümmerdichtungen. Insbesondere eignet sich die Erfindung jedoch für Zylinderkopfdichtungen und hier hauptsächlich für solche für Nutzfahrzeugmotoren. Diese können mit oder ohne Zylinderlaufbuchsen ausgestaltet sein. Besonders geeignet ist die Erfindung jedoch für die Verwendung in Verbrennungsmotoren ohne Zylinderlaufbuchsen oder mit Zylinderlaufbuchsen, die einen Buchsenüber- oder unterstand von maximal 0,15 mm aufweisen, insbesondere in Nutzfahrzeugmotoren. Aufgrund ihres hohen Zünddruckes von mindestens 140 bar, bevorzugt mindestens 160 bar und besonders bevorzugt mindestens 180 bar, stellen diese Verbrennungsmotoren besondere Anforderungen an die Abdichtfähigkeit der Zylinderkopfdichtungen.

Die Dichtungen, in denen die wellenförmige Profilierung bevorzugt ausgebildet ist, zeichnen sich durch eine Ausdehnung ihrer Oberfläche von maximal 1500 mm in Längsrichtung und 500 mm in Querrichtung aus, wobei die Brennräume einen Durchmesser von bis zu 200 mm aufweisen und die bei Mehrzylinderdichtungen vorhandenen Stege zwischen den Brennräumen eine Breite von mehr als 4 mm aufweisen. Die Dichtungen weisen neben der mindestens einen Brennraumdurchgangsöffnung mindestens 4 Durchgangsöffnungen für Befestigungsmittel sowie mindestens eine Schmierstoff- und/oder Kühlmitteldurchgangsöffnung auf.

Die Herstellung der erfindungsgemäßen metallischen Flachdichtung kann unter Einsatz bisher üblicher Verfahren und herkömmlicher Werkzeuge erfolgen. Abgesehen von den vorstehend beschriebenen Abweichungen können die üblichen Ausgangsmaterialien verwendet werden. Auch andere übliche, im vorstehenden nicht beschriebene Bestandteile metallischer Flachdichtungen können, sofern dies durch die zwingend erforderliche Ausgestaltung der Dichtung nicht ausgeschlossen ist, weiterhin verwendet werden. So kann die erfindungsgemäße Flachdichtung beispielsweise Abstützelemente im Hinterland der Dichtung aufweisen, die Verzügen in den abzudichtenden Gegenflächen entgegenwirken sollen. Hinzuweisen ist hier insbesondere auf die so genannten Hinterlandstopper, die insbesondere an den Schmalseiten von Zylinderkopfdichtungen und/oder im Bereich der Schraubenöffnungen angebracht sind. Diese können im Rahmen der Erfindung ebenfalls eingesetzt werden. Besonders zweckmäßig ist es, wenn diese beispielsweise ebenfalls die Form einer wellenförmigen Profilierung aufweisen. Sie können dann im selben Arbeitsschritt wie die wellenförmige(n) Profilierung(en) um die Brennraumdurchgangsöffnung erzeugt werden. Sie können aber auch aus mäanderförmigen, schachbrettartigen oder pyramidenstumpfförmigen Profilierungen bestehen. Außerdem können einzelne oder alle der Dichtungslagen ganz oder teilweise, ein- oder beidseitig mit einer Beschichtung versehen sein. Auch hier können alle bisher üblichen Materialien verwendet werden.

Die Erfindung soll nachfolgend anhand von Zeichnungen näher erläutert werden. Diese Zeichnungen beschreiben lediglich rein beispielhaft einige bevorzugte Ausgestaltungen der Erfindung, ohne dass diese auf die beschriebenen Beispiele beschränkt wäre. In den Zeichnungen zeigen schematisch:
- Figur 1: eine Teildraufsicht auf eine metallische Flachdichtung am Beispiel einer Zylinderkopfdichtung;
- Figur 2: einen Querschnitt entlang der Linie A-A in Figur 1;
- Figuren 3 (a) und 3 (b): Teilquerschnitte entlang der Linie B-B in Figur 1 zur Erläuterung der Bestimmung des Werts der Überhöhung am Brennraumrand;
- Figur 4: einen Teil- Querschnitt entlang der Linie C-C in Figur 1;
- Figur 5: eine Teildraufsicht auf ein weiteres Beispiel einer metallischen Flachdichtung am Beispiel einer Zylinderkopfdichtung;
- Figur 6: einen Querschnitt entlang der Linie D-D der Figur 5;
- Figur 7: einen Querschnitt entlang der Linie E-E der Figur 5;
- Figuren 8 bis 10: verschiedene Varianten der Ausgestaltung der Dichtung im Teilquerschnitt entlang der Linie D-D in Figur 5;
- Figur 11: einen Teilquerschnitt entlang der Linie H-H in Figur 5;
- Figuren 12 bis 14: Querschnitte entlang der Linie D-D' der Figur 5, wobei Figuren 12 und 14 Beispiele des Standes der Technik verdeutlichen;
- Figur 15: Kennlinien der Abdichtelemente der Dichtungen gemäß den Beispielen in Figuren 12 bis 14.

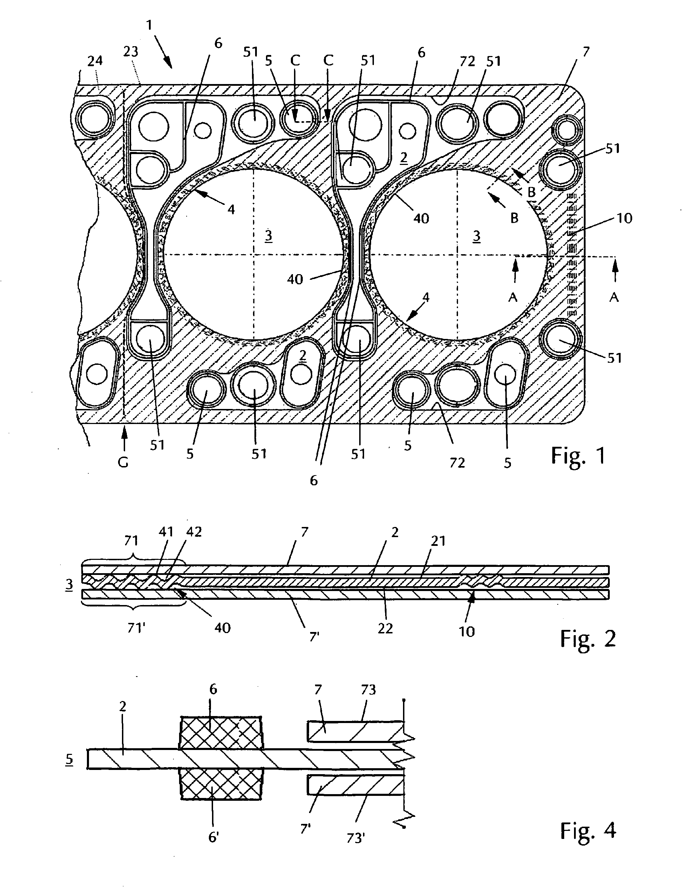

Figur 1 zeigt eine Teildraufsicht auf eine metallische Flachdichtung 1 am Beispiel einer Zylinderkopfdichtung. Wie sich aus Figuren 2 bis 4 ergibt, handelt es sich um eine dreilagige Dichtung mit einer Dichtungslage 2 sowie zwei Decklagen 7 und 7', die auf beiden Oberflächen 21 und 22 der Dichtungslage 2 angeordnet sind. Die Zylinderkopfdichtung 1 weist mehrere Brennraumöffnungen 3 auf, von denen hier nur zwei vollständig zu sehen sind. Daneben ist eine Vielzahl von weiteren Durchgangsöffnungen 5 im Außenbereich der Dichtungs- und Decklagen vorhanden, bei denen es sich um Öffnungen für Öl und Kühlwasser sowie um Schraubenöffnungen handelt, welch letztere mit Bezugszeichen 51 gekennzeichnet sind.

Die Brennraumöffnungen 3 werden jeweils von einem Abdichtelement 4 umgeben, das die Form einer wellenförmigen Profilierung 40 aufweist, in der sich Wellenberge 41 mit Wellentälern 42 abwechseln. Auf jeder der Oberflächen 21 und 22 der Dichtungslage 2 sind jeweils vier Wellenberge 41 vorhanden. Deren Scheitelpunkte 43 weisen einen Abstand a voneinander auf, der in einem Bereich bis 2,0, bevorzugt bis 1,7, besonders bevorzugt bis 1,5 und besonders bevorzugt bis 1,0 mm liegt. Die wellenförmige Profilierung 40 ist durch Prägen des jeweiligen Randbereiches des Dichtungslage 2 um die Durchgangsöffnung 3 herum erzeugt. Dadurch wird eine Dickenerhöhung im Vergleich zur originären Dicke d der Dichtungslage 2 im Bereich der wellenförmigen Profilierung 40 erreicht.

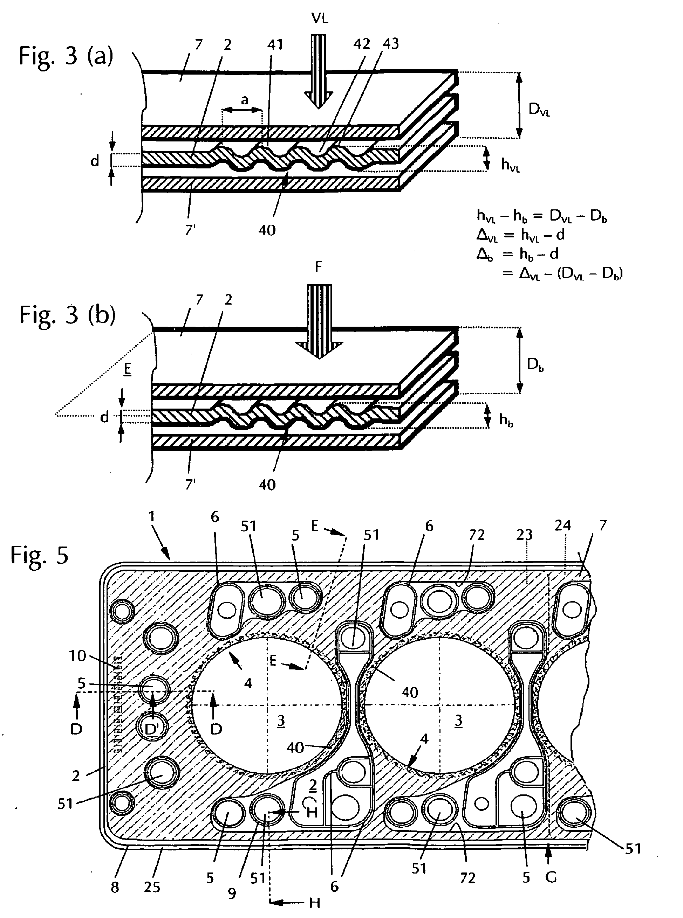

Figuren 3 (a) und 3 (b) verdeutlichen diese Dickenvergrößerung einerseits im nichteingebauten Zustand der Dichtung wobei zur Messung eine Vorlast (Kraft) von 2,4 N/mm² auf die Dichtung im Wesentlichen senkrecht wirkt (Figur 3 (a)) sowie im Fall der eingebauten Dichtung bei Belastung mit einer der Schraubenkraft äquivalenten Kraft (Figur 3 (b)). Zu Figur 3(a) ist zu bemerken, dass eine reproduzierbare Höhenmessung im vollkommen unbelasteten Zustand nicht möglich ist. Der Dickenunterschied Δ_{VL} ergibt sich aus der Differenz der Höhe h_{VL} im Bereich der wellenförmigen Profilierung 40 und der originären Dicke d der Dichtungslage 2. Die wellenförmige Profilierung 40 ist erfindungsgemäß so ausgelegt, dass sie einerseits elastische Eigenschaften aufweist, andererseits aber auch bei Beaufschlagung mit einer Kraft, die mindestens der zu erwartenden Belastung bei Betrieb der Dichtung entspricht, zu einer dauerhaften Überhöhung am Brennraumrand führt. Diese dauerhafte Überhöhung wird dadurch festgestellt, dass die Zylinderkopfdichtung 1 im Bereich der wellenförmigen Profilierung 40 zunächst mit einer Kraft von 2,4 N/mm² beaufschlagt wird. Diese Kraft (hier mit VL gekennzeichnet) wirkt im Wesentlichen senkrecht zur Ebene der Dichtungslage 2 auf die Dichtung ein. Im Wesentlichen senkrecht bedeutet hier, dass die Krafteinwirkung nicht mehr als 2 ° und insbesondere nicht mehr als 1° aus der Senkrechten abweicht.

Die resultierende Überhöhung im eingebauten Zustand Δ_{b} wird ermittelt, indem eine zur Schraubenkraft äquivalente Kraft F auf den Bereich der wellenförmigen Profilierung aufgebracht wird und die entsprechende Verformung in senkrechter Richtung gemessen wird. Auf diese Weise wird die sogenannte Kennlinie ermittelt, die die Dicke h_{b} des wellenförmig profilierten Bereichs in Abhängigkeit von der einwirkenden Kraft F angibt. Während die Vorlast VL üblicherweise dadurch erzeugt wird, dass mit einem Stempel von oben senkrecht auf den Bereich der wellenförmigen Profilierung gepresst wird, wird die Kraft F für die Ermittlung der Kennlinie mittels eines Flansches aufgebracht. Die Überhöhung Δ_{b} am Brennraum unter Einbaubedingungen ergibt sich aus der Höhendifferenz h_{b} zwischen der wellenförmigen Profilierung unter Krafteinwirkung und der originären Dicke der profilierten Lage, d. Diese liegt erfindungsgemäß in einem Bereich von 0,05 bis 0,3 mm, bevorzugt 0,05 bis 0,2 mm. Damit sorgt das Abdichtelement 4 während des Betriebs der Zylinderkopfdichtung 1 nicht nur für eine elastische Abdichtung der Brennraumöffnung 3, sondern sorgt gleichzeitig auch noch für eine Überhöhung entlang der Brennraumöffnung 3, die dazu führt, dass die durch die Befestigungsmittelöffnungen 51 hindurchgeführten Schrauben, mit denen die Zylinderkopfdichtung 1 zwischen Motorblock und Zylinderkopf verspannt wird, einen Zusammenspanndruck ausüben, der im Wesentlichen im Bereich um die Brennraumöffnungen 3 konzentriert ist. Die wellenförmigen Profilierungen 40 vereinigen also die Funktionen einer elastischen Sicke und eines Stoppers und sorgen durch gleichzeitig vorhandene elastische Verformung und bleibenden Überstand für eine exzellente Dichtigkeit, die durch Erzeugung einer Topographie in Umfangsrichtung um die Brennraumöffnungen 3 noch weiter verbessert werden kann.

Die weiteren Durchgangsöffnungen 5 im Hinterland der Dichtung, also Öffnungen für Öl und Kühlflüssigkeit, werden im gezeigten Fall durch Abdichtelemente 6 abgedichtet, die aus Dichtwülsten aus Elastomer bestehen. Diese Dichtwülste 6 sind so hoch ausgebildet, dass sie über die äußeren Oberflächen 73 und 73' der Deckbleche 7 und 7' vorstehen. Dies ist in Figur 4 zu erkennen, die einen Querschnitt entlang der Linie C-C in Figur 1 zeigt. Im Bereich der elastomeren Dichtelemente 6 weisen die Deckbleche 7 und 7' Ausnehmungen 72 auf, die groß genug sind, die weiteren Durchgangsöffnungen 5 und deren Abdichtelemente 6 aufzunehmen. Die Elastomerwülste 6 weisen dabei eine Breite von mindestens 0,5 mm auf. Die Deckbleche 7 und 7' dienen dabei gleichzeitig als Verformungsbegrenzer für die Abdichtelemente 6 und verhindern, dass das Elastomer weiter als bis auf die Höhe der Deckbleche 7 und 7' verpresst werden kann. In Bereichen, in denen mehrere Durchgangsöffnungen 5 eng beieinander liegen und/oder von einem gemeinsamen Abdichtelement 6 umgeben werden, ist eine gemeinsame Aussparung 72 in den Deckblechen 7, 7' vorhanden.

Weitere Aussparungen in den Deckblechen 7, 7' befinden sich auch im Bereich zwischen benachbarten Durchgangsöffnungen 3 sowie den angrenzenden Schraubenöffnungen 51. Hier umgeben die elastomeren Abdichtelemente 6 nicht nur die Durchgangsöffnungen 5 im Hinterland der Dichtung, sondern sie erstrecken sich in den gezeigten Beispielen auch über den Stegbereich zwischen benachbarten Durchgangsöffnungen 3 mit ihren Abdichtelementen 4.

Ein weiteres Abstützelement befindet sich im Bereich parallel zu den Schmalkanten der Dichtung. Dieses Abstützelement 10 verläuft im Wesentlichen parallel zum Randbereich der Dichtung (hier ist nur das rechte Abdichtelement im Bereich neben der rechten Brennraumöffnung 3 gezeigt). Das Abstützelement 10 dient in an sich bekannter Weise dazu, Verzüge zwischen Motorblock und Zylinderkopf in diesem Bereich zu verhindern. Das Abstützelement 10 ist hier ebenfalls in Form einer wellenförmigen Profilierung ausgebildet. Dabei sind die Wellenberge und Wellentäler jedoch niedriger ausgeführt als im Bereich der wellenförmigen Profilierungen 40 um die Brennraumöffnungen 3. Außerdem sind weniger Wellenberge und Wellentäler vorhanden.

Die Dichtungslage 2, welche die ringförmigen Profilierungen 40 enthält, ist in mehrere Segmente geteilt, von denen das Segment 23 vollständig zu erkennen ist, das Segment 24 nur teilweise. Die Segmente umfassen jeweils zwei Brennraumöffnungen, so dass mehrere Segmente zu Zylinderkopfdichtungen mit 4, 6 oder mehr Brennraumöffnungen zusammengesetzt werden können. Der Grenzbereich, in dem die Segmente 23 und 24 aneinandergrenzen, ist mit gestrichelten Linien gekennzeichnet und mit dem Buchstaben G markiert. Im Unterschied zu den Segmenten der Dichtungslage 2 sind die Deckbleche 7 und 7' über die gesamte Ausdehnung der Zylinderkopfdichtung einstückig gebildet, so dass sie auch den Grenzbereich G überdecken. Die Deckbleche 7 und 7' weisen keinerlei Dicht- oder Abstützelemente auf und sind vollkommen eben ausgebildet. Die Flächenausdehnung des Deckblechs 7 ist in Figur 1 anhand der Schraffur verdeutlicht. Das zweite Deckblech 7', das in Figur 1 nicht zu sehen ist, ist entsprechend dem Deckblech 7 ausgebildet.

Figur 5 zeigt ein weiteres Beispiel einer erfindungsgemäßen Zylinderkopfdichtung in Teildraufsicht. Diese Zylinderkopfdichtung entspricht im Wesentlichen derjenigen der Figur 1, jedoch unterscheidet sie sich in der Anordnung der weiteren Durchgangsöffnungen 5, also der Wasser- und Ölöffnungen. Außerdem reichen die Deckbleche 7 und 7' nicht bis zum äußeren Rand der Dichtungslage 2, sondern lassen den Außenrandbereich 25 der Dichtungslage 2 frei. Der Grund liegt darin, dass entlang des Außenrandes der Dichtungslage 2 eine Dichtwulst 8 aus elastomerem Material umläuft. Figur 5 soll dabei aus Vereinfachungsgründen mehrere Ausführungsformen der Dichtwulst 8 umfassen. Ebenso wie die Elastomerwülste 6 weisen die Dichtwülste 8 eine Breite von mindestens 0,5 mm auf.

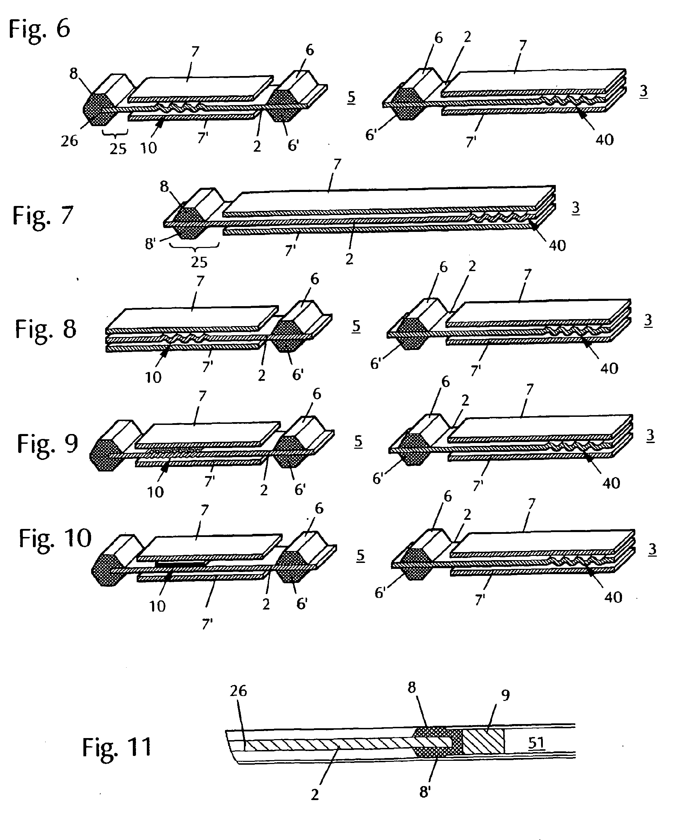

Im Beispiel der Figur 6 ist die Außenrand-Dichtwulst 8 an die Außenkante 26 der Dichtungslage 2 angespitzt. Die Dichtwulst 8 steht nicht nur nach außen, sondern auch über beide Oberflächen der Dichtungslage 2 über die Oberflächen der Deckbleche 7 und 7' vor und schafft so eine Abdichtlinie am Außenrand der Dichtung. Figur 6 zeigt einen Querschnitt entlang der Linie D-D der Figur 5 in einem Bereich vom Außenrand der Dichtung bis zu einer Brennraumöffnung 3. Die Brennraumöffnung 3 ist erneut von einer wellenförmigen Profilierung 40 umgeben. Die Durchgangsöffnung 5 im Hinterland der Dichtung dagegen, beispielsweise eine Durchgangsöffnung für Kühlwasser, wird von Abdichtelementen aus Elastomer abgedichtet, der in Form von Dichtwülsten 6 und 6' auf beiden Oberflächen der Dichtungslage 2 aufgetragen ist und über die Oberflächen der Deckbleche 7 und 7' vorsteht, wie dies bereits im Zusammenhang mit Figur 4 beschrieben wurde. An der Schmalseite der Dichtung verläuft erneut ein Hinterland-Abstützelement 10, welches demjenigen der Figur 2 entspricht.

Figur 7 zeigt einen Teil-Querschnitt entlang der Linie E-E der Figur 5. Die Abdichtung der Brennraumöffnungen entspricht derjenigen der vorangegangenen Figuren. Die Außenrandabdichtung ist im Unterschied zur Figur 6 nicht an die Außenkante 26 der Dichtungslage 2 angespitzt, sondern im Randbereich 25 auf beiden Seiten der Dichtungslage 2 als Dichtwulst 8 bzw. 8' aufgetragen.

Figur 8 zeigt eine Variante der Ausbildung des Bereiches, der in Figur 6 gezeigt ist. Hier ist keine Außenrand-Dichtwulst vorgesehen, sondern die Deckbleche 7 und 7' reichen bis an den Außenrand der Dichtungslage 2 heran. Was die Gestaltung des Außenrandes der Dichtungslagen anbetrifft, entspricht dieser Querschnitt also eher demjenigen der Figur 1 als demjenigen der Figur 5.

Figuren 9 und 10 zeigen Alternativen der Hinterlandabstützung 10. Anstelle der wellenförmigen Profilierung, die in Figuren 2 und 6 dargestellt ist, besteht die Hinterland-Abstützung 10 in der Ausführung gemäß Figur 9 aus einer Oberflächenstrukturierung der Oberflächen 21 und 22 der Dichtungslage 2. Diese Oberflächenstrukturierung, die zweckmäßig ebenfalls durch Prägen erzeugt wird, besteht beispielsweise aus schachbrettartig angeordneten Erhebungen, die von Vertiefungen getrennt werden. In Figur 10 wird als Hinterland-Abstützung eine streifenförmige Auflage verwendet. Bevorzugt handelt es sich um eine metallische Auflage, die entweder durch Schweißen oder ein ähnliches Verfahren an der Dichtungslage 2 befestigt wurde, oder um ein so genanntes Hardcoating, also eine Beschichtung aus schwer komprimierbarem Material.

Figur 11 zeigt einen Teilquerschnitt entlang des Außenrandbereiches der in Figur 5 dargestellten Dichtung, nämlich entlang der Linie H-H. Hier ist entlang des Außenrandes der Dichtungslage 2 ebenfalls eine Elastomeranspritzung vorhanden, die im Außenrandbereich 25 umlaufende elastomere Dichtwülste 8, 8' bildet. Im gezeigten Beispiel sind die Deckbleche 7 und 7' nicht bis an den Außenrand der Dichtungslage 2 herangeführt, sondern weisen einen relativ großen Abstand zu diesem auf. Die Deckbleche 7 und 7' können daher nicht als Verpressungsschutz für die Dichtwulst 8 wirken. Um dennoch ein übermäßiges Verpressen der Dichtwülste 8, 8' zu verhindern, sind in Nachbarschaft zu den Dichtwülsten 8, 8' mehrere lokale Abstützelemente 9 in die Dichtungslage 2 eingebracht. Bei den Abstützelementen 9 handelt es sich konkret um Metallhülsen, welche eine gröβere Dicke aufweisen als die Dicke der Dichtungslage 2 und beidseitig über die Dichtungslage 2 vorstehen. Die Metallhülsen 9 sind jeweils in die Schraubenöffnungen 51 eingesetzt, die sich in Nachbarschaft zum Außenrand der Dichtungslage 2 befinden. Aufgrund der größeren Dicke der Hülsen 9 im Vergleich zur Dicke der Dichtungslage 2 wirken diese als Verpressungsschutz für die Elastomerwülste 8, 8' am Dichtungsrand.

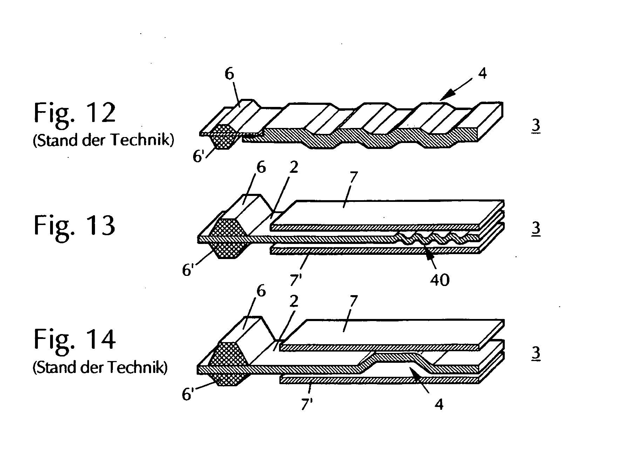

Figuren 12 bis 14 dienen dem Vergleich der erfindungsgemäßen Flachdichtung und hier speziell der Abdichtung der Brennraumöffnungen 3 mit den bisher im Stand der Technik üblichen Konzepten. Das erfindungsgemäße Beispiel ist in Figur 13 in Teil-Querschnittsdarstellung gezeigt. Die Figur entspricht im Wesentlichen dem rechten Bereich der Figur 6. Figuren 12 und 14 zeigen den gleichen Ausschnitt, jedoch mit unterschiedlichen Dichtelementen für die Brennraumöffnung 3. In Figur 12 wird die Brennraumöffnung 3 von einer plastisch verformbaren Mehrfachsicke als Abdichtelement 4 abgedichtet. An diese Mehrfachsicke schließt sich ein Insert mit Elastomerraupen 6, 6' an, wobei der Insert angeschweißt ist. Die Dicke der Mehrfachsicke als Abdichtelement 4 ist sehr groß, so dass die eingeformte Mehrfachsicke überwiegend plastische, aber nur minimale elastische Eigenschaften aufweist. Die Dichtung gemäß Figur 14 weist dagegen eine rein elastische Sicke als Abdichtelement 4 auf. Ohne einen Stopper kann diese elastische Sicke jedoch im Betrieb der Dichtung vollständig abgeflacht werden. Eine Kraftkonzentration am Brennraum ist ohne Zusatzmaßnahmen nicht möglich.

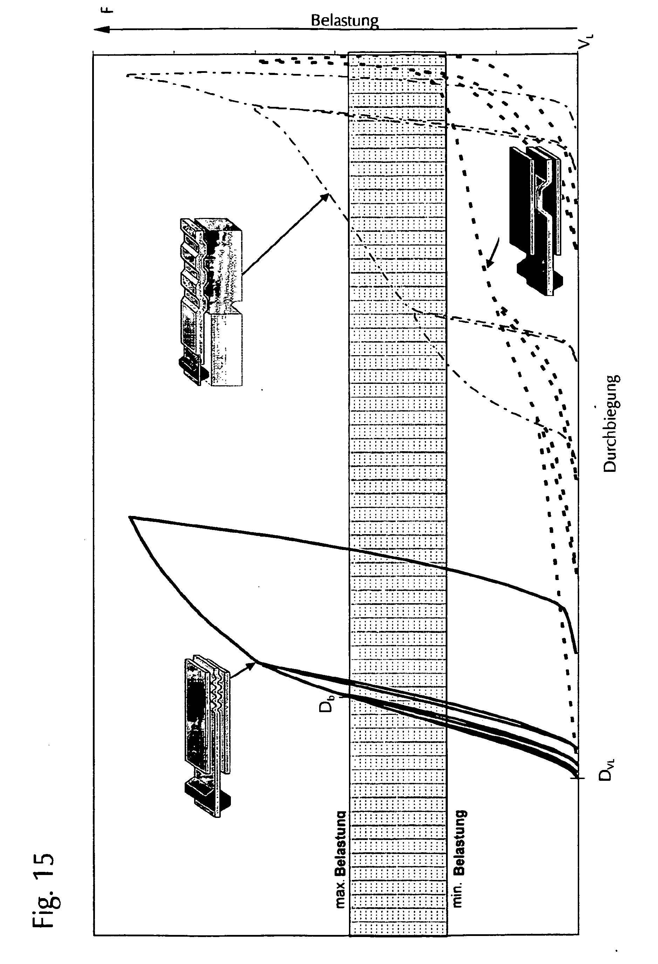

Figur 15 zeigt Kennlinien für die in Figuren 12 bis 14 dargestellten Abdichtelemente. Dargestellt ist die Verformung des Abdichtelementes gegen die Belastung. Der schraffierte Balken verdeutlicht die während des Betriebs der Dichtungen in einem bestimmten Motor zu erwartenden minimalen und maximalen Belastungen, also den tatsächlichen Arbeitsbereich der jeweiligen Abdichtelemente während des Betriebs der Dichtung. Die plastische Sicke der Figur 12 besitzt eine höhere Steifigkeit, das Rückfedervermögen ist aber gering. Dagegen zeigt die wellenförmige Profilierung als Abdichtelement in der erfindungsgemäßen Dichtung gemäß Figur 13 sowohl elastisches als auch starres Verhalten. Sie weist eine hohe Steifigkeit bei gleichzeitig guten Rückfederungseigenschaften auf und im gesamten typischen Arbeitsbereich sehr konstantes und gutes Abdichtverhalten.

## Patentansprüche

1. Metallische Flachdichtung (1) mit mindestens einer Dichtungslage (2), die wenigstens eine Brennraumdurchgangsöffnung (3) aufweist, die von einem elastisch verformbaren Abdichtelement (4) umschlossen wird, das in Form einer wellenförmigen Profilierung (40) in der Dichtungslage (2) in der Weise ausgebildet ist, dass auf jeder der Oberflächen (21, 22) der Dichtungslage (2) die Brennraumdurchgangsöffnung (3) ringförmig umgebend wenigstens zwei Wellenberge (41) und zwei Wellentäler (42) vorhanden sind, wobei die Dicke (h_{VL}) der Dichtungslage (2) im Bereich des Abdichtelements (4) im unbelasteten Zustand größer ist als die originäre Dicke (d) der Dichtungslage (2), wobei die Dichtungslage (2) mindestens 4 Durchgangsöffnungen für Befestigungsmittel (51) sowie wenigstens eine weitere Durchgangsöffnung (5) für Schmier- oder Kühlmittel aufweist, welche von einem Abdichtelement (6) aus Elastomer umschlossen wird, und wobei außer der wellenförmigen Profilierung (40) keine weiteren Abdicht- oder Abstützelemente um die Brennraumdurchgangsöffnung (3) vorhanden sind,
**dadurch gekennzeichnet,**
**dass** das Abdichtelement (4) bei einer Belastung mit einer Linienpressung von 500 bis 2800 N/mm in einer zur Ebene (E) der Dichtungslage (2) im Wesentlichen senkrechten Richtung eine um 0,05 bis 0,3 mm größere Dicke (h_{b}) aufweist als die originäre Dicke (d) der Dichtungslage (2), wobei die Brennraumdurchgangsöffnung (3) einen Durchmesser kleiner als 200 mm aufweist und wobei die Dichtungslage (2) aus Metall mit einer Zugfestigkeit von mindestens 600 N/mm² besteht.

2. Metallische Flachdichtung nach Anspruch 1,
**dadurch gekennzeichnet,**
**dass** die wellenförmige Profilierung (40) ein sinus-, trapez- oder zickzackförmiges Querschnittsprofil aufweist.

3. Metallische Flachdichtung nach Anspruch 1 oder 2,
**dadurch gekennzeichnet,**
**dass** die wellenförmige Profilierung (40) in Radial- und /oder Umfangsrichtung um die Brennraumdurchgangsöffnung (3) veränderlich ausgebildet ist, insbesondere bezüglich wenigstens einer der folgenden Eigenschaften:
- Höhe der Wellenberge (41),
- Querschnittsform der Wellenberge (41) und/oder Wellentäler (42),
- Abstand zwischen benachbarten Wellenbergen (41) und
- Materialstärke im Bereich der Wellenberge (41) und/oder Wellentäler (42).

4. Metallische Flachdichtung nach einem der vorhergehenden Ansprüche,
**dadurch gekennzeichnet,**
**dass** der Abstand (a) zwischen den Scheitelpunkten (43) benachbarter Wellenberge (41) in einem Bereich bis 2,0 mm, bevorzugt bis 1,7 mm, besonders bevorzugt bis 1,5 mm und insbesondere bis 1,0 mm, liegt.

5. Metallische Flachdichtung nach einem der vorhergehenden Ansprüche,
**dadurch gekennzeichnet,**
**dass** die Dichtungslage (2) eine Dicke (d) von 0,3 bis 0,6 mm, insbesondere 0,3 bis 0,5 mm, aufweist.

6. Metallische Flachdichtung nach einem der vorhergehenden Ansprüche,
**dadurch gekennzeichnet,**
**dass** sie mehrere Brennraumdurchgangsöffnungen (3) aufweist, die jeweils durch einen Steg mit einer Breite von mindestens 4 mm getrennt sind.

7. Metallische Flachdichtung nach einem der vorhergehenden Ansprüche,
**dadurch gekennzeichnet,**
**dass** die Dichtungslage (2) aus Metall mit einer Zugfestigkeit von mindestens 1000 N/mm² und insbesondere aus Kohlenstoffstahl, Edelstahl oder Federstahl besteht.

8. Metallische Flachdichtung nach einem der vorhergehenden Ansprüche,
**dadurch gekennzeichnet,**
**dass** die Dichtungslage (2) mehrere von wellenförmigen Profilierungen (40) umgebene Brennraumdurchgangsöffnungen (3) aufweist und in wenigstens zwei Segmente (23, 24) aufgeteilt ist, die im Bereich zwischen zwei benachbarten Brennraumdurchgangsöffnungen (3) mit wellenförmigen Profilierungen (4) aneinandergrenzen.

9. Metallische Flachdichtung nach einem der vorhergehenden Ansprüche,
**dadurch gekennzeichnet,**
**dass** das Abdichtelement (4) bei einer Belastung mit einer Linienpressung von 800-2500 N/mm und besonders 800-1500 N/mm in einer zur Ebene (E) der Dichtungslage (2) im Wesentlichen senkrechten Richtung eine um 0,05 bis 0,3 mm größere Dicke (h_{b}) aufweist als die originäre Dicke (d) der Dichtungslage (2).

10. Metallische Flachdichtung nach einem der vorhergehenden Ansprüche,
**dadurch gekennzeichnet,**
**dass** die Dichtung neben der Dichtungslage (2) keine weiteren Dichtungslagen umfasst.

11. Metallische Flachdichtung nach einem der Ansprüche 1 bis 9,
**dadurch gekennzeichnet,**
**dass** sie wenigstens ein Deckblech (7, 7') aufweist, das an einer der Oberflächen (21, 22) der Dichtungslage (2) anliegt und dabei den Bereich der wellenförmigen Profilierung (40) überdeckt.

12. Metallische Flachdichtung nach Anspruch 11,
**dadurch gekennzeichnet,**
**dass** das wenigstens eine Deckblech (7, 7') im der wellenförmigen Profilierung (40) gegenüberliegenden Bereich einen ebenen Abschnitt (71, 71') aufweist.

13. Metallische Flachdichtung nach Anspruch 11 oder 12,
**dadurch gekennzeichnet,**
**dass** in das wenigstens eine Deckblech (7, 7') eine ringförmige Sicke als Abdichtelement für die wenigstens eine weitere Durchgangsöffnung (5) der Dichtungslage (2) eingeformt ist.

14. Metallische Flachdichtung nach Anspruch 11 oder 12,
**dadurch gekennzeichnet,**
**dass** das wenigstens eine Deckblech (7, 7') im Bereich um die wenigstens eine weitere Durchgangsöffnung (5) der Dichtungslage gemäß Anspruch 8 eine Aussparung (72) in der Weise aufweist, dass das die weitere Durchgangsöffnung (5) umgebende Abdichtelement (6) aus Elastomer in der Aussparung (72) aufgenommen wird.

15. Metallische Flachdichtung nach Anspruch 14,
**dadurch gekennzeichnet,**
**dass** das elastomere Abdichtelement (6) so hoch ausgebildet ist, dass es über die von der Dichtungslage (2) abgewandte Oberfläche (73, 73') des wenigstens einen Deckblechs (7, 7') vorsteht.

16. Metallische Flachdichtung nach einem der Ansprüche 11 bis 15,
**dadurch gekennzeichnet,**
**dass** das wenigstens eine Deckblech (7, 7') den Bereich, in dem benachbarte Segmente (23, 24) der Dichtungslage (2) gemäß Anspruch 7 aneinandergrenzen, überdeckt.

17. Metallische Flachdichtung nach einem der Ansprüche 11 bis 16,
**dadurch gekennzeichnet,**
**dass** das wenigstens eine Deckblech (7, 7') den Bereich des Außenrandes (25) der Dichtungslage (2) zumindest abschnittsweise und insbesondere vollständig ausspart.

18. Metallische Flachdichtung nach einem der vorhergehenden Ansprüche,
**dadurch gekennzeichnet,**
**dass** entlang des Außenrandes (25) der Dichtungslage (2) zumindest abschnittsweise eine über beide Oberflächen (21, 22) der Dichtungslage (2) vorstehende Dichtwulst (8, 8') aus Elastomer verläuft.

19. Metallische Flachdichtung nach einem der vorhergehenden Ansprüche,
**dadurch gekennzeichnet,**
**dass** das elastomere Abdichtelement (6) und/oder die Dichtwulst (8,8') aus Elastomer mit einer Härte von mindestens 35 Shore A besteht.

20. Metallische Flachdichtung nach einem der vorhergehenden Ansprüche,
**dadurch gekennzeichnet,**
**dass** das elastomere Abdichtelement (6) und/oder die Dichtwulst (8,8') eine Breite von mindestens 0,5 mm aufweist.

21. Metallische Flachdichtung nach einem der Ansprüche 18 bis 20,
**dadurch gekennzeichnet,**
**dass** die Dichtwulst (8) über die Außenkante (26) der Dichtungslage (2) vorspringend angeordnet ist.

22. Metallische Flachdichtung nach einem der Ansprüche 17 bis 21,
**dadurch gekennzeichnet,**
**dass** sie mindestens ein Abstützelement (9) enthält.

23. Metallische Flachdichtung nach Anspruch 22,
**dadurch gekennzeichnet,**
**dass** die Dichtungslage (2) benachbart zur Dichtwulst (8, 8') wenigstens ein lokales Abstützelement (9) aufweist, das mit einer Höhe über wenigstens eine Oberfläche (21, 22) der Dichtungslage (2) vorsteht, die geringer ist als der Überstand der Dichtwulst (8, 8') über diese Oberfläche (21, 22).

24. Metallische Flachdichtung nach Anspruch 23,
**dadurch gekennzeichnet,**
**dass** das Abstützelement (9) als Hülse in eine weitere Durchgangsöffnung (5), insbesondere in eine Schraubenöffnung (51), eingesetzt ist.

25. Metallische Flachdichtung nach einem der Ansprüche 14 bis 24,
**dadurch gekennzeichnet,**
**dass** sie mehrere von wellenförmigen Profilierungen (40) umgebene Durchgangsöffnungen (3) aufweist und ein elastomeres Abdichtelement (6) im Bereich zwischen benachbarten Durchgangsöffnungen (3) hindurch verläuft.

26. Metallische Flachdichtung nach einem der vorhergehenden Ansprüche, nämlich Zylinderkopfdichtung mit einer Erstreckung in Längsrichtung von bis zu 1500 km und in Querrichtung von bis zu 500 mm.

27. Verwendung einer metallischen Flachdichtung nach einem der Ansprüche 1 bis 26 zur Abdichtung zwischen einem Zylinderkopf und einem Motorblock in einem Motor ohne Laufbuchse oder mit Laufbuchsen mit einem Buchsenüberstand oder -unterstand von maximal 0,15 mm.

28. Verwendung einer metallischen Flachdichtung nach einem der Ansprüche 1 bis 26 zur Abdichtung zwischen einem Zylinderkopf und einem Motorblock in einem Motor mit einem Zünddruck von mindestens 140 bar, bevorzugt mindestens 160 bar, besonders bevorzugt mindestens 180 bar.

## Claims

1. Metallic flat gasket (1) with at least one gasket layer (2), which comprises at least one combustion chamber passage opening (3), which is surrounded by an elastically deformable sealing element (4), which is formed in the gasket layer (2) as an undulating profiling (40) in such a way that on each of the surfaces (21, 22) of the gasket layer (2) at least two wave crests (41) and two wave troughs (42) are given which circularly surround the combustion chamber passage opening (3), with the thickness (h_{VL}) of the gasket layer (2) in the area of the sealing element (4) in the unloaded state being larger than the original thickness (d) of the gasket layer (2), with the gasket layer (2) comprising at least four passage openings for fastening means (51) as well as at least one additional passage opening (5) for lubricant or coolant, which is surrounded by a further sealing element (6) of elastomer, and where apart from the undulating profiling (40) no other sealing or supporting elements are given around the combustion chamber passage opening (3), **characterized in that** the sealing element (4) at a load with a line compression of 500 to 2800 N/mm in a direction essentially orthogonal to the plane (E) of the gasket layer (2) shows a thickness (h_{b}) which is larger by 0.05 to 0.3 mm than the original thickness (d) of the gasket layer (2), where the combustion chamber passage opening (3) has a diameter smaller than 200 mm and where the gasket layer (2) consists of a metal with a tensile strength of at least 600 N/mm².

2. Metallic flat gasket according to claim 1, **characterized in that** the undulating profile (40) has a sinusoidal, trapezoidal or zigzag-shaped cross-sectional profile.

3. Metallic flat gasket according to claim 1 or 2, **characterized in that** the undulating profile (40) in the radial and/or circumferential direction around the combustion chamber passage opening (3) is formed changeable, in particular with respect to at least one of the following properties:
- height of the wave crests (41),
- cross-sectional shape of the wave crests (41) and/or wave troughs (42),
- distance between two adjacent wave crests (41) and
- material thickness in the area of the wave crests (41) and/or wave troughs (42).

4. Metallic flat gasket according to one of the preceding claims, **characterized in that** the distance (a) between the vertices (43) of adjacent wave crests (41) is in the range of up to 2.0 mm, preferable up to 1.7 mm, particularly preferable up to 1.5 mm and in particular up to 1.0 mm.

5. Metallic flat gasket according to one of the preceding claims, **characterized in that** the gasket layer (2) has a thickness (d) of 0.3 to 0.6 mm, in particular 0.3 to 0.5 mm.

6. Metallic flat gasket according to one of the preceding claims, **characterized in that** it comprises several combustion chamber passage openings (3) which are each separated by a bridge with a thickness of at least 4 mm.

7. Metallic flat gasket according to one of the preceding claims, **characterized in that** the gasket layer (2) consists in a metal with a tensile strength of at least 1000 N/mm² and in particular consists in a carbon steel, a stainless steel or a spring steel.

8. Metallic flat gasket according to one of the preceding claims, **characterized in that** the gasket layer (2) comprises several combustion chamber passage openings (3) surrounded by an undulating profiling (40) and is divided into at least two segments (23, 24) which in the area between two adjacent combustion chamber passage openings (3) adjoin to each other with undulating profilings (40).

9. Metallic flat gasket according to one of the preceding claims, **characterized in that** the sealing element (4) under a load with a line compression of 800 to 2500 N/mm and in particular of 800 to 1500 N/mm in a direction essentially orthogonal to the plane (E) of the gasket layer (2) shows a thickness (h_{b}) which is larger by 0.05 to 0.3 mm than the original thickness (d) of the gasket layer (2).

10. Metallic flat gasket according to one of the preceding claims, **characterized in that** the gasket comprises no further gasket layers in addition to gasket layer (2).

11. Metallic flat gasket according to one of claims 1 to 9, **characterized in that** it comprises at least one covering metal sheet (7, 7'), which abuts to one of the surfaces (21, 22) of the gasket layer (2) and this way covers the area of the undulating profiling (40).

12. Metallic fiat gasket according to claim 11, **characterized in that** the at least one covering metal sheet (7, 7') in the area opposite to the undulating profiling (40) comprises a plane section (71, 71').

13. Metallic flat gasket according to claim 11 or 12, **characterized in that** a circular bead is formed into the at least one covering metal sheet (7, 7') as a sealing element for the at least one further passage opening (5) of the gasket layer (2).

14. Metallic flat gasket according to claim 11 or 12, **characterized in that** the at least one covering metal sheet (7, 7') in the area around the at least one further passage opening (5) of the gasket layer according to claim 8 comprises a recess (72) in such a way that the sealing element (6) of elastomer surrounding the further passage opening (5) is taken up in the recess (72).

15. Metallic flat gasket according to claim 14, **characterized in that** the elastomeric sealing element (6) is formed with such a height that it protrudes beyond the surface (73, 73') of the at least one covering metal sheet (7, 7') pointing away from the gasket layer (2).

16. Metallic flat gasket according to one of claims 11 to 15, **characterized in that** the at least one covering metal sheet (7, 7') covers the area, in which adjacent segments (23, 24) of the gasket layer (2) adjoin to each other according to claim 7.

17. Metallic flat gasket according to one of claims 11 to 16, **characterized in that** the at least one covering metal sheet (7, 7') is recessed in the area of the outer edge (25) of the gasket layer (2) at least in sections and in particular completely.

18. Metallic fiat gasket according to one of the preceding claims, **characterized in that** a sealing lip (, 8') of elastomer protruding from both surfaces (21, 22) of the gasket layer (2) extends along the outer edge (25) of the gasket layer (2) at least in sections.

19. Metallic flat gasket according to one of the preceding claims, **characterized in that** the elastomeric sealing element (6) and/or the sealing lip (8, 8') consists in an elastomer with a hardness of at least 35 shore A.

20. Metallic flat gasket according to one of the preceding claims, **characterized in that** the elastomeric sealing element (6) and/or the sealing lip (8, 8') has a width of at least 0.5 mm.

21. Metallic flat gasket according to one of claims 18 to 20, **characterized in** the sealing lip being arranged in such a way that it protrudes beyond the outer edge (26) of the gasket layer (2).

22. Metallic flat gasket according to one of claims 17 to 21, **characterized in that** it comprises at least one support element.

23. Metallic flat gasket according to claim 22, **characterized in that** the gasket layer (2) adjacent to the sealing lip (8, 8') comprises at least one local support element, which protrudes beyond at least one surface (21, 22) of the gasket layer (2) with a height that is smaller than the protrusion of the sealing lip (8, 8') beyond this surface (21, 22).

24. Metallic flat gasket according to claim 23, **characterized in that** the support element (9) is inserted as a sleeve into a further passage opening (5), in particular into a screw opening (51).

25. Metallic flat gasket according to one of claims 14 to 24, **characterized in that** it comprises several passage openings (3) surrounded by undulating profiles (40) and that an elastomeric sealing element (6) extends through the area between adjacent passage openings (3).

26. Metallic fiat gasket according to one of the preceding claims, namely cylinder head gasket with an extension in its longitudinal direction of up to 1500 mm and in its transverse direction of up to 500 mm.

27. Use of a metallic flat gasket according to one of claims 1 to 26 for sealing between a cylinder head and an engine block in an engine without any liner or with liners with a liner protrusion or a liner recess of at the most 0.15 mm.

28. Use of a metallic flat gasket according to one of claims 1 to 26 for sealing between a cylinder head and an engine block in an engine with an ignition pressure of at least 140 bar, preferably at least 160 bar, particularly preferred at least 180 bar.

## Revendications

1. Joint métallique plat (1) avec au moins une couche (2) de joint, qui comprend au moins une ouverture (3) de passage vers une chambre de combustion, qui est entourée d'un élément d'étanchéité élastiquement déformable (4) qui est formé dans la couche (2) de joint selon un profil ondulant (40) d'une manière telle que, sur chacune des surfaces (21, 22) de la couche (2) de joint, au moins deux crêtes (41) d'ondulations et deux creux (42) d'ondulations soient offerts, qui entourent circulairement l'ouverture (3) de passage pour la chambre de combustion, l'épaisseur (h_{VL}) de la couche (2) de joint dans la zone de l'élément d'étanchéité (4) étant, à l'état déchargé, plus importante que l'épaisseur d'origine (d) de la couche (2) de joint, la couche (2) de joint comprenant au moins quatre ouvertures de passage pour des moyens de fixation (51) ainsi qu'au moins une ouverture de passage supplémentaire (5) pour un lubrifiant ou un réfrigérant, qui est entourée par un autre élément d'étanchéité (6) en élastomère, et dans lequel, en dehors du profil ondulant (40), aucun autre élément d'étanchéité ou de support ne sont présents autour de l'ouverture (3) de passage pour la chambre de combustion, ***caractérisé en* ce *que*** l'élément d'étanchéité (4), sous une charge linéaire de 500 à 2800 N/mm dans une direction sensiblement orthogonale au plan (E) de la couche (2) de joint, présente une épaisseur (h_{b}) qui est supérieure de 0,05 à 0,3 mm à l'épaisseur d'origine (d) de la couche (2) de joint, l'ouverture (3) de passage pour la chambre de combustion ayant un diamètre inférieur à 200 mm et la couche (2) de joint étant constituée d'un métal avec une résistance à la traction d'au moins 600 N/mm².

2. Joint métallique plat selon la revendication 1, ***caractérisé en* ce *que*** le profil ondulant (40) a, en section transversale, un profil sinusoïdal, trapézoïdal ou en zigzag.

3. Joint métallique plat selon la revendication 1 ou 2, ***caractérisé en ce que*** le profil ondulant (40), dans la direction radiale et/ou circonférentielle autour de l'ouverture (3) de passage pour la chambre de combustion, est conformé modifiable, en particulier en ce qui concerne au moins l'une des propriétés suivantes :
- hauteur des crêtes (41) d'ondulations
- forme en section transversale des crêtes (41) d'ondulations et/ou des creux (42) d'ondulations,
- distance entre deux crêtes (41) d'ondulations adjacentes et
- épaisseur du matériau dans la zone des crêtes (41) d'ondulations et/ou des creux (42) d'ondulations.

4. Joint métallique plat selon l'une des revendications précédentes, ***caractérisé en* ce *que*** la distance (a) entre les apex (43) de crêtes d'ondulations adjacentes (41) est de jusqu'à 2,0 mm, de manière préférable jusqu'à 1,7 mm, de manière particulièrement préférable jusqu'à 1,5 mm et en particulier jusqu'à 1,0 mm.

5. Joint métallique plat selon l'une des revendications précédentes, ***caractérisé en* ce *que*** la couche (2) de joint possède une épaisseur (d) de 0,3 à 0,6 mm, en particulier de 0,3 à 0,5 mm.

6. Joint métallique plat selon l'une des revendications précédentes, ***caractérisé en* ce *que*** 'il comprend plusieurs ouvertures (3) de passage pour la chambre de combustion qui sont chacune séparées par une bande d'une largeur d'au moins 4 mm.

7. Joint métallique plat selon l'une des revendications précédentes, ***caractérisé en ce que*** la couche (2) de joint est constituée d'un métal avec une résistance à la traction d'au moins 1000 N/mm² et est en particulier constitué d'acier au carbone, d'acier inoxydable ou d'un acier à ressorts.

8. Joint métallique plat selon l'une des revendications précédentes, ***caractérisé en* ce *que*** la couche (2) de joint comprend plusieurs ouvertures (3) de passage pour la chambre de combustion entourées d'un profil ondulant (40) et est divisée en au moins deux segments (23, 24) qui, dans la zone entre deux ouvertures (3) de passage pour la chambre de combustion, sont contigus avec des profils ondulants (40).

9. Joint métallique plat selon l'une des revendications précédentes, ***caractérisé en ce que*** l'élément d'étanchéité (4) sous une charge avec une compression linéaire de 800 à 2500 N/mm et en particulier de 800 à 1500 N/mm dans une direction essentiellement orthogonale au plan (E) de la couche (2) de joint présente une épaisseur (h_{b}) qui est supérieure de 0,05 à 0,3 mm à l'épaisseur d'origine (d) de la couche (2) de joint.

10. Joint métallique plat selon l'une des revendications précédentes, ***caractérisé en* ce *que*** le joint ne comprend aucune autre couche de joint en complément à la couche (2) de joint.

11. Joint métallique plat selon l'une des revendications 1 à 9, ***caractérisé en* ce qu'**il comprend au moins une feuille métallique de couverture (7, 7'), qui s'aboute contre l'une des surfaces (21, 22) de la couche (2) de joint et recouvre de cette manière la zone du profil ondulant (40).

12. Joint métallique plat selon la revendication 11, ***caractérisé en* ce *que*** ladite au moins une feuille métallique de couverture (7, 7') dans la zone opposée au profil ondulant (40) comprend une section plane (71, 71').

13. Joint métallique plat selon la revendication 11 ou 12, ***caractérisé en* ce *qu'****un* cordon circulaire est formé dans ladite au moins une feuille métallique de couverture (7, 7') en tant qu'élément d'étanchéité pour ladite au moins une ouverture de passage supplémentaire (5) de la couche (2) de joint.

14. Joint métallique plat selon la revendication 11 ou 12, ***caractérisé en* ce *que*** ladite au moins une feuille métallique de couverture (7, 7') dans la zone située autour de ladite au moins une ouverture supplémentaire (5) de passage de la couche de joint selon la revendication 8 comprend un renfoncement (72) de façon que l'élément d'étanchéité (6) en élastomère entourant l'ouverture de passage supplémentaire (5) soit engagé dans le renfoncement (72).

15. Joint métallique plat selon la revendication 14, ***caractérisé en* ce *que*** l'élément d'étanchéité (6) en élastomère soit formé avec une hauteur telle qu'il fasse saillie de la surface (73, 73') de ladite au moins une feuille métallique de couverture (7, 7') en pointant hors de la couche (2) de joint.

16. Joint métallique plat selon l'une des revendications 11 à 15, ***caractérisé en ce que*** ladite au moins une feuille métallique de couverture (7, 7') couvre la zone dans laquelle des segments adjacents (23, 24) de la couche (2) de joint sont contigus selon la revendication 7.

17. Joint métallique plat selon l'une des revendications 11 à 16, ***caractérisé en ce que*** ladite au moins une feuille métallique de couverture (7, 7') est encastrée dans la zone du bord extérieur (25) de la couche (2) de joint au moins pour certaines sections, et particulièrement de manière complète.

18. Joint métallique plat selon l'une des revendications précédentes, ***caractérisé en* ce qu'**une lèvre d'étanchéité (8, 8') en élastomère faisant saillie des deux surfaces (21, 22) de la couche (2) de joint s'étend le long du bord extérieur (25) de la couche (2) de joint au moins sur certaines sections.

19. Joint métallique plat selon l'une des revendications précédentes, ***caractérisé en ce que*** l'élément d'étanchéité (6) en élastomère et/ou la lèvre d'étanchéité (8, 8') est constituée d'un élastomère d'une dureté shore A d'au moins 35.

20. Joint métallique plat selon l'une des revendications précédentes, ***caractérisé en* ce *que*** l'élément d'étanchéité (6) en élastomère et/ou la lèvre d'étanchéité (8, 8') présente(nt) une largeur d'au moins 0,5 mm.

21. Joint métallique plat selon l'une des revendications 18 à 20, ***caractérisé en* ce *que*** la lèvre d'étanchéité est disposée de telle sorte qu'elle fasse saillie au-delà du bord extérieur (26) de la couche (2) de joint.

22. Joint métallique plat selon l'une des revendications 17 à 21, ***caractérisé en* ce *qu'****il* comprend au moins un élément de support.

23. Joint métallique plat selon la revendication 22, ***caractérisé en* ce *que*** la couche (2) de joint adjacente à la lèvre d'étanchéité (8, 8') comprend au moins un élément de support local, qui fait saillie au-delà d'au moins une surface (21, 22) de la couche (2) de joint avec une hauteur qui est inférieure la saillie de la lèvre d'étanchéité (8, 8') au-delà de cette surface (21, 22).

24. Joint métallique plat selon la revendication 23, ***caractérisé en* ce *que*** l'élément de support (9) est inséré comme un manchon dans une autre ouverture (5) de passage, en particulier dans une ouverture (51) pour une vis.

25. Joint métallique plat selon l'une des revendications 14 à 24, ***caractérisé en* ce qu'**il comprend plusieurs ouvertures (3) de passage entourées par des profils ondulants (40) et ***en ce* qu'**un élément d'étanchéité en élastomère (6) s'étend à travers la zone entre des ouvertures de passage adjacentes (3).

26. Joint métallique plat selon l'une des revendications précédentes, à savoir joint de tête de cylindre avec un prolongement dans sa direction longitudinale pouvant atteindre jusqu'à 1500 mm et dans sa direction transversale jusqu'à 500 mm.

27. Utilisation d'un joint métallique plat selon l'une des revendications 1 à 26, destiné à assurer l'étanchéité entre une tête de cylindre et un bloc moteur dans un moteur sans aucune chemise, ou avec des chemises avec une saillie pour les chemises, ou un renfoncement pour les chemises de 0,15 mm tout au plus.

28. Utilisation d'un joint métallique plat selon l'une des revendications 1 à 26, destiné à assurer l'étanchéité entre une tête de cylindre et un bloc moteur dans un moteur avec une pression d'allumage d'au moins 140 bar, de manière préférée d'au moins 160 bar, et de manière particulièrement préférée d'au moins 180 bar.
